# EUROPEAN PATENT APPLICATION

(11) **EP 4 083 815 A1**
(43) Date of publication of application: **02.11.2022**
(21) Application number: 21744979.2
(22) Date of filing: 20.01.2021
(51) Int. Cl.: G06F 16/587

(54) **IMAGE SEARCH METHOD AND APPARATUS**

(30) Priority: 21.01.2020 CN 202010072791
(71) Applicant: Beijing Dajia Internet Information Technology Co., Ltd., Beijing 100085 (CN)
(72) Inventor: LI, Kun, Beijing 100085 (CN)
(74) Representative: Vossius & Partner Patentanwälte Rechtsanwälte mbB
(86) International application number: PCT/CN2021/072909
(87) International publication number: WO 2021/147916

(57) **Abstract**

An image search method and apparatus, an electronic device and a storage medium. The image search method can be applied to an electronic device, which comprises a camera. The electronic device acquires an image to be matched, a first position of the electronic device and the azimuth of the camera, determines from a preset scene database a target preset area in which the first position is located and a target preset azimuth interval in which the azimuth is located, and searches for a corresponding target preset image set, thereby determining a target image for the image to be matched.

## Description

### CROSS-REFERENCE

The present application claims the priority to the Chinese Patent Application NO. 202010072791.4 filed on January 21, 2020, the entire contents of which are hereby incorporated by reference.

### TECHNICAL FIELD

The present disclosure relates to the field of localization, and in particular, to a method and apparatus for searching for an image, an electronic device and a storage medium.

### BACKGROUND

Image-based visual re-localization is widely used in applications such as Augmented Reality (AR), Simultaneous Localization and Mapping (SLAM) and the like. The most critical step in the image-based visual re-localization is to acquire a position and an attitude of an electronic device through a sensor such as a GPS sensor and a gyroscope, so as to find out a matching image that matches an image that is currently captured by the electronic device.

In related art, when finding the matching image that matches the image captured by the electronic device, the matching image is searched for in all images that are captured in advance within a position range where a position of the electronic device is located. For each position within the position range where the position of the electronic device is located, it is possible to capture a plurality of images in different directions in advance at this position. When the number of the images captured in advance within the position range where the position of the electronic device is located is relative great, in finding the matching image that matches the image currently captured by the electronic device, each of the images captured in different directions in advance at each position within the position range where the position of the electronic device is located needs to be determined whether it is matched with the image captured by a camera of the electronic device one by one.

### SUMMARY

The present disclosure provides a method and apparatus for searching for an image, an electronic device and a storage medium.

According to a first aspect of embodiments of the present disclosure, there is provided a method for searching for an image, applied to an electronic device including a camera, and the method includes: acquiring an image to be matched, a first position of the electronic device, and an azimuth of the camera; retrieving, from a preset scene database, an identification of a target preset area where the first position is located and an identification of a target preset azimuth interval where the azimuth is located; searching for a corresponding target preset image set in the preset scene database according to the identification of the target preset area and the identification of the target preset azimuth interval, wherein the preset scene database stores a plurality of preset image sets, and identifications of a preset area and a preset azimuth interval corresponding to each of the preset image sets; and acquiring, from the target preset image set, a target image that matches the image to be matched.

In some embodiments, the method further includes: establishing the preset scene database, wherein the establishing the preset scene database includes: dividing an area for image search into a plurality of preset areas, and dividing an azimuth interval for image search into a plurality of preset azimuth intervals; and dividing all preset images captured in advance into a plurality of preset image sets based on a preset area where a capturing position of each of the preset images is located and a preset azimuth interval where a azimuth corresponding to each of the preset images is located, wherein a capturing position of each preset image in a preset image set is within a preset area corresponding to the preset image set, and an azimuth corresponding to each preset image in the preset image set is within a preset azimuth interval corresponding to the preset image set; and for each preset image set in the plurality of preset image sets, storing the preset image set, an identification of a preset area corresponding to the preset image set, and an identification of a preset azimuth interval corresponding to the preset image set in the preset scene database in correspondence.

In some embodiments, the dividing the area for image search into the plurality of preset areas and the dividing the azimuth interval for image search into the plurality of preset azimuth intervals includes: dividing the area for image search into the plurality of preset areas based on preset overlapping area information, wherein any two adjacent preset areas in all the preset areas have an overlapping portion; and dividing the azimuth interval for image search into the plurality of preset azimuth intervals based on preset overlapping azimuth range information, wherein any two adjacent preset azimuth intervals in all the preset azimuth intervals have an overlapping portion.

In some embodiments, the position is within an overlapping portion of multiple preset areas; the retrieving, from the preset scene database, the identification of the target preset area where the position is located includes: determining, in the multiple preset areas where the position is located, a preset area that satisfies a first screening condition as the target preset area, wherein the first screening condition includes that a distance between a center point of the preset area and the position is the smallest; and retrieving the identification of the target preset area from the preset scene database.

In some embodiments, the position is within an overlapping portion of multiple preset areas; the retrieving, from the preset scene database, the identification of the target preset area where the position is located and the identification of the target preset azimuth interval where the azimuth is located includes: determining, in the multiple preset areas where the position is located, a preset area that satisfies a first screening condition as the target preset area, wherein the first screening condition includes that a distance between a center point of the preset area and the position is the smallest; and retrieving the identification of the target preset area from the preset scene database.

In some embodiments, the azimuth is within an overlapping portion of multiple preset azimuth intervals; the retrieving, from the preset scene database, the identification of the target preset azimuth interval where the azimuth is located includes: determining, in the multiple preset azimuth intervals where the azimuth is located, a preset azimuth interval that satisfies a second screening condition as the target preset azimuth interval, wherein the second screening condition includes that an angular difference between a preset average azimuth in the preset azimuth interval and the azimuth is the smallest; and retrieving the identification of the target preset azimuth interval from the preset scene database.

In some embodiments, the acquiring the azimuth of the camera of the electronic device when capturing the image to be matched includes: acquiring a magnetic induction intensity and a gravitational acceleration of the electronic device when capturing the image to be matched; generating a magnetic induction intensity vector corresponding to the magnetic induction intensity, and generating a gravitational acceleration vector corresponding to the gravitational acceleration; calculating a rotation matrix between a geographic coordinate system and a camera coordinate system based on the magnetic induction intensity vector and the gravitational acceleration vector; and calculating the azimuth based on the rotation matrix between the geographic coordinate system and the camera coordinate system.

In some embodiments, the acquiring the target image that matches the image to be matched from the target preset image set includes: extracting a feature of the image to be matched; generating a feature vector of the image to be matched based on the feature of the image to be matched; calculating a similarity between the feature vector of the image to be matched and a feature vector of each of the preset images in the target preset image set; and determining, in the target preset image set, a preset image that has a feature vector with a greatest similarity to the feature vector of the image to be matched, as the target image that matches the image to be matched.

In some embodiments, the method further includes: acquiring an attitude of the electronic device when capturing the image to be matched; determining a re-localized position of the electronic device based on a capturing position of the target image and the position; and determining a re-localized attitude of the electronic device based on a preset attitude corresponding to the target image and the attitude.

According to a second aspect of the embodiments of the present disclosure, there is provided an apparatus for searching for an image, applied to an electronic device including a camera, and the apparatus includes: an information acquisition module, configured to acquire an image to be matched, a position of the electronic device, and an azimuth of the camera; a first search module, configured to retrieve an identification of a target preset area where the first position is located and an identification of a target preset azimuth interval where the azimuth is located from a preset scene database; a second search module, configured to search for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets; and a target image search module, configured to acquire a target image that matches the image to be matched from the target preset image set.

In some embodiments, the apparatus for searching for the image further includes: a preset scene database establishment module, configured to divide an area for image search into a plurality of preset areas, and divide an azimuth interval for image search into a plurality of preset azimuth intervals; and divide all preset images captured in advance into a plurality of preset image sets, wherein a capturing position of each of preset images in a preset image set is within a preset area corresponding to the preset image set, and an azimuth corresponding to each of the preset images in the preset image set is within a preset azimuth interval corresponding to the preset image set; and for each preset image set in the plurality of preset image sets, store the preset image set, an identification of a preset area corresponding to the preset image set, and an identification of a preset azimuth interval corresponding to the preset image set in the preset scene database in correspondence.

In some embodiments, the preset scene database establishment module includes: a preset area division sub-module, configured to divide the area for image search into the plurality of preset areas based on preset overlapping area information, wherein any two adjacent preset areas in all the preset areas have an overlapping portion; and a preset azimuth interval division sub-module, configured to divide the azimuth interval for image search into the plurality of preset azimuth intervals based on preset overlapping azimuth range information, wherein any two adjacent preset azimuth intervals in all the preset azimuth intervals have an overlapping portion.

In some embodiments, the first search module is further configured to, when the position is within an overlapping portion of multiple preset areas, determine, in the multiple preset areas where the position is located, a preset area satisfying a first screening condition as the target preset area, wherein the first screening condition includes that a distance between a center point of the preset area and the position is the smallest; and retrieve the identification of the target preset area from the preset scene database.

In some embodiments, the first search module is further configured to, when the azimuth is within an overlapping portion of multiple preset azimuth intervals, determine, in the multiple preset azimuth intervals where the azimuth is located, a preset azimuth interval satisfying a second screening condition as the target preset azimuth interval, wherein the second screening condition includes that an angular difference between a preset average azimuth in the preset azimuth interval and the azimuth is the smallest; and retrieve the identification of the target preset azimuth interval from the preset scene database.

In some embodiments, the information acquisition module includes: an azimuth determination sub-module, configured to acquire a magnetic induction intensity and a gravitational acceleration of the electronic device when the image to be matched is captured; generate a magnetic induction intensity vector corresponding to the magnetic induction intensity, and generate a gravitational acceleration vector corresponding to the gravitational acceleration; calculate a rotation matrix between a geographic coordinate system and a camera coordinate system based on the magnetic induction intensity vector and the gravitational acceleration vector; and calculate the azimuth of the camera on the electronic device based on the rotation matrix between the geographic coordinate system and the camera coordinate system.

In some embodiments, the target image search module includes: a match sub-module, configured to extract a feature of the image to be matched; generate a feature vector of the image to be matched based on the feature of the image to be matched; calculate a similarity between the feature vector of the image to be matched and a feature vector of each preset image in the target preset image set; and determine, in the target preset image set, a preset image that has a feature vector with the greatest similarity to the feature vector of the image to be matched, as the target image that matches the image to be matched.

In some embodiments, the apparatus for searching for the image further includes: a re-localization module, configured to acquire an attitude of the electronic device when capturing the image to be matched; determine a re-localized position of the electronic device based on a capturing position of the target image and the position; and determine a re-localized attitude of the electronic device based on a preset attitude corresponding to the target image and the attitude.

According to a third aspect of the present disclosure, there is provided an electronic device including: a camera; a processor; and a memory for storing instructions executable by the processor; wherein the processor is configured to execute the instructions to implement the following operations: acquiring an image to be matched, a first position of the electronic device, and an azimuth of the camera; retrieving, from a preset scene database, an identification of a target preset area where the first position is located and an identification of a target preset azimuth interval where the azimuth is located; searching for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets; and acquiring a target image that matches the image to be matched from the target preset image set.

According to a fourth aspect of the present disclosure, there is provided a non-transitory computer-readable storage medium, wherein instructions in the storage medium, when being executed by a processor of an electronic device, causes the electronic device including a camera to perform the following operations: acquiring an image to be matched, a first position of the electronic device, and an azimuth of the camera; retrieving, from a preset scene database, an identification of a target preset area where the first position is located and an identification of a target preset azimuth interval where the azimuth is located; searching for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets; and acquiring a target image that matches the image to be matched from the target preset image set.

In the embodiments of the present disclosure, by grouping all the preset images in terms of the position and the azimuth, a scope for the image search can be reduced, and precision and efficiency of the image search can be improved.

### BRIEF DESCRIPTION OF THE DRAWINGS

FIG. 1 is a flowchart showing a method for searching for an image according to an embodiment;
FIG. 2 is a schematic flowchart of establishing a correspondence between a preset area, a preset azimuth interval and a preset image set;
FIG. 3 is a schematic flowchart of acquiring a matching image that matches an image currently captured by a camera of an electronic device;
FIG. 4 is a structural block diagram of an apparatus for searching for an image according to an embodiment; and
FIG. 5 is a structural block diagram of an electronic device according to an embodiment.

### DETAILED DESCRIPTION

The present disclosure will be further described in detail below with reference to the accompanying drawings and embodiments. It should be understood that specific embodiments described herein are only used to explain the related disclosure, but not to limit the disclosure. In addition, it should be noted that, for the convenience of description, only parts relevant to the related disclosure are shown in the accompanying drawings.

It should be noted that embodiments of the present disclosure and features in the embodiments may be combined with each other without any conflict. The present disclosure will be described in detail below with reference to the accompanying drawings and in conjunction with the embodiments.

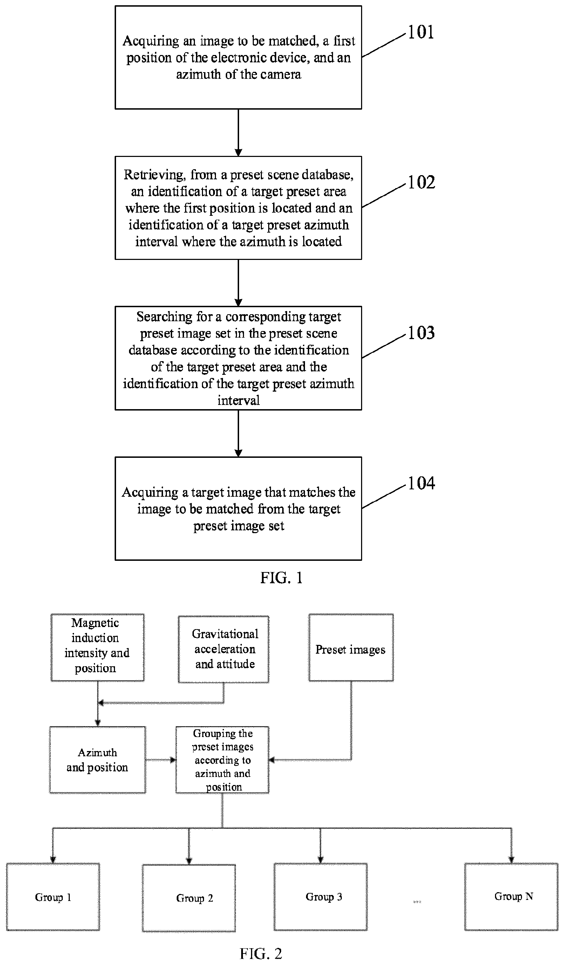

FIG. 1 is a flowchart showing an embodiment of a method for searching for an image according to an exemplary embodiment. The method may be performed by an electronic device with a camera and the method includes 101 to 104.

In 101, an image to be matched, a first position of the electronic device, and an azimuth of the camera are acquired.

In some embodiments of the present disclosure, acquiring the image to be matched may include acquiring the image to be matched that is captured by the electronic device, acquiring the first position of the electronic device may include acquiring a position of the electronic device when the image to be matched is captured, and acquiring the azimuth of the camera may include acquiring the azimuth of the camera on the electronic device when the image to be matched is captured. In some embodiments of the present disclosure, the electronic device may be a mobile phone, a wearable device, or the like.

In some embodiments of the present disclosure, 101 to 104 may be performed each time an image is searched for, for example, each time the image is searched for to re-localize the electronic device. Each time 101 to 104 are performed, one image search process is completed.

In some embodiments of the present disclosure, the position of the electronic device when capturing the image to be matched may be acquired through a GPS sensor on the electronic device. An attitude of the electronic device when capturing the image to be matched may be acquired through a gyroscope on the electronic device. A magnetic induction intensity of the electronic device when capturing the image to be matched may be acquired through a magnetometer on the electronic device. A gravitational acceleration of the electronic device when capturing the image to be matched may be acquired through a gravity sensor on the electronic device.

In some embodiments of the present disclosure, the azimuth of the camera of the electronic device may also be referred to as an orientation of the camera of the electronic device in a geographic coordinate system. The azimuth of the camera of the electronic device is an angle between an optical-axis direction of the camera of the electronic device and a true north direction.

In some embodiments of the present disclosure, when the azimuth of the electronic device when capturing the image to be matched is calculated in a process of searching for the image for the first time, the azimuth of the camera of the electronic device when capturing the image to be matched in the process of searching for the image for the first time can be calculated based on the magnetic induction intensity output by the magnetometer on the electronic device when capturing the image to be matched and the gravitational acceleration output by the gravity sensor on the electronic device when capturing the image to be matched. After the searching for the image for the first time, each time the azimuth of the camera of the electronic device when capturing the image to be matched is acquired, an amount of change in the azimuth can be determined according to the acquired attitude of the electronic device when capturing the image to be matched and an attitude of the electronic device when the azimuth was acquired last time. The azimuth of the electronic device when capturing the image to be matched can be obtained by adding the azimuth determined the last time and the amount of change in the azimuth together.

In some embodiments of the present disclosure, the acquiring the azimuth of the camera on the electronic device includes: acquiring a magnetic induction intensity of the electronic device and a gravitational acceleration of the electronic device when the image to be matched is captured; generating a magnetic induction intensity vector corresponding to the magnetic induction intensity, and generating a gravitational acceleration vector corresponding to the gravitational acceleration; calculating a rotation matrix between the geographic coordinate system and a camera coordinate system based on the magnetic induction intensity vector corresponding to the magnetic induction intensity and the gravitational acceleration vector; and calculating the azimuth of the camera on the electronic device based on the rotation matrix.

In some embodiments of the present disclosure, the acquired azimuth of the camera on the electronic device may be acquired through an angle between an optical-axis of the camera on the electronic device and a horizontal component of the geomagnetic field. Each time the azimuth of the camera on the electronic device is acquired, the magnetic induction intensity can be acquired by using the magnetometer on the electronic device, and the gravitational acceleration can be acquired by using the gravity sensor on the electronic device. The magnetic induction intensity vector M corresponding to the magnetic induction intensity is generated, and the gravitational acceleration vector G corresponding to the gravitational acceleration is generated. The magnetic induction intensity vector is acquired by projecting a vector representing the magnetic induction intensity in the geographic coordinate system to x, y, and z axes in a coordinate system of the electronic device, and combining the projections. The gravitational acceleration vector is acquired by projecting a vector representing the gravitational acceleration in the geographic coordinate system onto the x, y, and z axes in the coordinate system of the electronic device, and combining the projections. Then, an outer product of the vectors M and G is calculated to obtain a horizontal vector H perpendicular to the vectors M and G, and an outer product of the vectors G and H is calculated to obtain a horizontal component M1 of the geomagnetic field. The horizontal component of the geomagnetic field is a component in a horizontal direction of the magnetic induction intensity in the geographic coordinate system. After the horizontal component M1 of the geomagnetic field is calculated, the rotation matrix between the geographic coordinate system and the camera coordinate system can be obtained, and the rotation matrix between the geographic coordinate system and the camera coordinate system is represented as [H, M1, G]. The camera coordinate system is established based on the acquired attitude of the electronic device. The X-axis of the camera coordinate system is on a plane where a screen of the electronic device is located, and points to the right side of the screen of the electronic device, the Y-axis of the camera coordinate system is on the plane where the screen of the electronic device is located, and is perpendicular to the X-axis, and the Z-axis of the camera coordinate system is perpendicular to the screen of an electronic device. The X-axis of the geographic coordinate system points to the east, the Y-axis of the geographic coordinate system points to the north, and the Z-axis of the geographic coordinate system points to the sky direction along a geographic vertical line. Finally, the azimuth of the camera on the electronic device can be calculated based on the rotation matrix between the geographic coordinate system and the camera coordinate system. When the azimuth of the camera on the electronic device is calculated based on the rotation matrix between the geographic coordinate system and the camera coordinate system, the Z-axis in the coordinate system of the electronic device is projected to the X-axis and the Y-axis in the geographic coordinate system, respectively, to obtain projections of the Z-axis of the electronic device on the X-axis and the Y-axis in the geographic coordinate system. The projections of the Z-axis of the electronic device on the X-axis and the Y-axis in the geographic coordinate system constitute a projection vector. Finally, an angle between the projection vector and the Y-axis in the geographic coordinate system is calculated, and this angle is the azimuth.

In 102, an identification of a target preset area where the first position is located and an identification of a target preset azimuth interval where the azimuth is located are retrieved from a preset scene database.

In some embodiments of the present disclosure, the preset scene database stores a plurality of preset image sets and identifications of a preset area and a preset azimuth interval corresponding to each of the preset image sets.

In some embodiments of the present disclosure, after the position of the electronic device and the azimuth of the camera on the electronic device are acquired, all preset areas where the acquired position is located and all preset azimuth intervals where the acquired azimuth is located may be determined. Then, a target preset area where the acquired position is located is determined from among all the preset areas where the acquired position is located, and a target preset azimuth interval where the acquired azimuth is located is determined from among all the preset azimuth intervals where the acquired azimuth is located. Finally, the identification of the target preset area where the acquired position is located and the identification of the target preset azimuth interval where the acquired azimuth is located are retrieved from the preset scene database.

In some embodiments of the present disclosure, the method further includes: establishing the preset scene database, and establishing the preset scene database includes: dividing an area for image search into a plurality of preset areas, and dividing an azimuth interval for image search into a plurality of preset azimuth intervals; and dividing all preset images captured in advance into a plurality of preset image sets, where a capturing position of each of preset images in a preset image set is within a preset area corresponding to the preset image set, and an azimuth corresponding to each of the preset image in the preset image set is within a preset azimuth interval corresponding to the preset image set; and for each preset image set in the plurality of preset image sets, storing the preset image set, an identification of a preset area corresponding to the preset image set, and an identification of a preset azimuth interval corresponding to the preset image set in the preset scene database in correspondence.

In some embodiments of the present disclosure, the preset image is an image captured in advance.

In some embodiments of the present disclosure, each preset image has a capturing position, and each preset image corresponds to an azimuth.

For each preset image, the capturing position of the preset image is a position of the electronic device that captures the preset image when the electronic device captures the preset image, and the azimuth corresponding to the preset image is an azimuth of the camera of the electronic device that captures the preset image when the electronic device captures the preset image.

In some embodiments of the present disclosure, all the captured preset images may be divided into the plurality of preset image sets in advance.

In some embodiments of the present disclosure, each of the plurality of preset image sets corresponds to one preset area and one preset azimuth interval.

In some embodiments of the present disclosure, for each preset image set, the preset area corresponding to the preset image set is different from a preset area corresponding to another preset image set, and/or the preset azimuth interval corresponding to the preset image set is different from a preset azimuth interval corresponding to another preset image set.

In some embodiments of the present disclosure, for each preset image set, the capturing position of each preset image in the preset image set is within the preset area corresponding to the preset image set, and the azimuth corresponding to each preset image in the preset image set is within the preset azimuth interval corresponding to the preset image set.

In other words, for each preset image set, all the preset images, among all the preset images captured in advance, which have the capturing positions within the preset area corresponding to the preset image set and the corresponding azimuths within the preset azimuth interval corresponding to the preset image set form the preset image set.

In some embodiments of the present disclosure, one preset image may be simultaneously located in multiple preset image sets.

For example, for a preset image, the capturing position of the preset image is located in the same sub-area of a preset area p and a preset area p1, and the capturing position of the preset image is in both the preset area p and the preset area p1. The azimuth corresponding to the preset image is located in the same sub-interval of a preset azimuth interval d and a preset azimuth interval d1, and the azimuth corresponding to the preset image is in both the preset azimuth interval d and the preset azimuth d1.

The preset image is simultaneously located in four preset image sets, i.e., a preset image set corresponding to the preset area p and corresponding to the preset azimuth interval d, a preset image set corresponding to the preset area p and corresponding to the preset azimuth interval d1, a preset image set corresponding to the preset area p1 and corresponding to the preset azimuth interval d, and a preset image set corresponding to the preset area p1 and corresponding to the preset azimuth interval d1.

In some embodiments of the present disclosure, the area for image search, such as an area for AR or SLAM, may be divided into all preset areas in advance, and each preset area has a longitude range and a latitude range.

In some embodiments of the present disclosure, an overall azimuth interval for image search may be divided into the plurality of preset azimuth intervals in advance. For example, the overall azimuth interval is 0-360, and all preset azimuth intervals obtained after the division of the overall azimuth interval include [0, 30], (30, 60], (60, 90], (90, 120], (120, 150], (150, 180], (180, 210]... (330, 360].

In some embodiments of the present disclosure, for a position of the electronic device, when it is determined that the position is within a preset area according to the longitude and the latitude of the position, the preset area where the position is located may be determined.

In some embodiments of the present disclosure, multiple preset areas in all the preset areas may have the same sub-area. When a position of the electronic device is located in the same sub-area of the multiple preset areas, the position is simultaneously located in each of the multiple preset areas.

For example, the preset area p and the preset area p1 have the same sub-area. For a position of the electronic device, if the position is located in the same sub-area of the preset area p and the preset area p1, the position is simultaneously in the preset area p and the preset area p1.

In some embodiments of the present disclosure, the multiple preset areas may refer to a plurality of preset areas composed of any number of preset areas that include the same sub-area.

In some embodiments of the present disclosure, multiple preset azimuth intervals in all the preset azimuth intervals may have the same sub-interval. When an azimuth of the camera of the electronic device is located in the same sub-interval of the multiple preset azimuth intervals, the azimuth is simultaneously located in each of the multiple preset azimuth intervals.

For example, preset azimuth intervals [0, 30] and [28, 50] have a common sub-interval, that is, [28, 30].

For an azimuth of the camera of the electronic device, if the azimuth is located in the common sub-interval, the azimuth is simultaneously located in the preset azimuth interval d and the preset azimuth interval d1. All the preset azimuth intervals where the acquired azimuth of the camera of the electronic device is located include the preset azimuth interval d and the preset azimuth interval d1.

In some embodiments of the present disclosure, when the acquired position of the electronic device is in only one preset area, all the preset areas where the acquired position of the electronic device is located are the one preset area. When the acquired position of the electronic device is in multiple preset areas, all the preset areas where the acquired position of the electronic device is located include the multiple preset areas.

In some embodiments of the present disclosure, when the acquired azimuth of the camera of the electronic device is within only one preset azimuth interval, all the preset azimuth intervals where the acquired azimuth of the camera of the electronic device is located are the one preset azimuth interval. When the acquired azimuth of the camera of the electronic device is in multiple preset azimuth intervals, all the preset azimuth intervals where the acquired azimuth of the camera of the electronic device is located include the multiple preset azimuth intervals.

For example, the acquired position of the electronic device is located in the same sub-area of the preset area p and the preset area p1, the acquired position of the electronic device is in both the preset area p and the preset area p1, and all the preset areas where the acquired position of the electronic device is located include the preset area p and the preset area p1. The acquired azimuth of the camera of the electronic device is located in the same sub-interval of the preset azimuth interval d and the preset azimuth interval d1, and the acquired azimuth of the camera of the electronic device is within both the preset azimuth interval d and the preset azimuth interval d1. All the preset azimuth intervals where the acquired azimuth of the camera of the electronic device is located include the preset azimuth interval d and the preset azimuth interval d1.

In some embodiments of the present disclosure, when the acquired position of the electronic device is only in one preset area, the preset area where the acquired position of the electronic device is located can be directly determined as the target preset area.

In some embodiments of the present disclosure, when the acquired azimuth of the camera of the electronic device is only within one preset azimuth interval, the preset azimuth interval where the acquired azimuth of the camera of the electronic device is located can be directly determined as the target preset azimuth interval.

In some embodiments of the present disclosure, when there are multiple preset areas where the acquired position is located, in determining the target preset area from among all the preset areas where the acquired position is located, the target preset area from among all the preset areas where the acquired position is located may be determined according to a distance between a center point of each of the preset areas and the acquired position. An outline of each preset area may be a rectangle or a square, and the center point of the preset area may be at an intersection of two diagonal lines in the rectangle or the square representing the outline. After the distance between the center point of each preset area of all the preset areas where the acquired position is located and the acquired position is calculated, a preset area with the smallest distance between the center point of the preset area and the acquired position can be determined as the target preset area.

In some embodiments of the present disclosure, when all the preset azimuth intervals where the acquired azimuth is located include multiple preset azimuth intervals, in determining the target preset azimuth interval from among all the preset azimuth intervals where the acquired azimuth is located, an angular difference between a preset average azimuth in each of all the preset azimuth intervals where the acquired azimuth is located and the acquired azimuth can be calculated. For each preset azimuth interval, the preset average azimuth in the preset azimuth interval is a sum of a right endpoint and a left endpoint of the preset azimuth interval divided by 2. Then, a preset azimuth interval, in all the preset azimuth intervals where the acquired azimuth is located, that has the smallest angular difference between the preset average azimuth in the preset azimuth interval and the acquired azimuth can be determined as the target preset azimuth interval.

In some embodiments of the present disclosure, when all the preset areas where the acquired position is located include multiple preset areas, in determining the target preset area from among all the preset areas where the acquired position is located, for each preset area of all the preset areas where the acquired position is located, a distance between a center point of the preset area and the acquired position can be calculated. Then, a preset area with the smallest distance between a center point of the preset area and the acquired position in all the preset areas where the acquired position is located can be used as the target preset area.

In some embodiments of the present disclosure, when all the preset azimuth intervals where the acquired azimuth is located include multiple preset azimuth intervals, in determining the target preset azimuth interval from among all the preset azimuth intervals where the acquired azimuth is located, for each preset azimuth interval of all the preset azimuth intervals where the acquired azimuth is located, an angular difference between a preset average azimuth in the preset azimuth interval and the acquired azimuth can be calculated. Then, a preset azimuth interval with the smallest angular difference between the preset average azimuth in the preset azimuth interval and the acquired azimuth in all the preset azimuth intervals where the acquired azimuth is located can be used as the target preset azimuth interval.

For example, the acquired position of the electronic device is located in the same sub-area of the preset area p and the preset area p1, and the acquired position of the electronic device is located in both the preset area p and the preset area p1. The acquired azimuth of the camera of the electronic device is located in the same sub-interval of the preset azimuth interval d and the preset azimuth interval d1, and the acquired azimuth of the camera of the electronic device is located in both the preset azimuth interval d and the preset azimuth interval d1.

Assuming that the distance between the center point of the preset area p and the acquired position is smaller than the distance between the center point of the preset area p1 and the acquired position, and the angular difference between the preset average azimuth in the preset azimuth interval d and the acquired azimuth is smaller than the angular difference between the preset average azimuth in the preset azimuth interval d1 and the acquired azimuth, then the distance between the center point of the preset area p and the acquired position is the smallest, and the angular difference between the preset average azimuth in the preset azimuth interval d and the acquired azimuth is the smallest, the preset area p is used as the target area, and the preset azimuth interval d is used as the target preset azimuth interval.

In some embodiments of the present disclosure, each preset azimuth interval may correspond to a sector-shaped area in a circle, and an origin of the sector-shaped area is an origin of the circle. For each preset azimuth interval, an angle between two boundary lines of the sector-shaped area corresponding to the preset azimuth interval is a difference between the left endpoint and the right endpoint of the preset azimuth interval. For each preset azimuth interval, the two boundary lines of the sector-shaped area corresponding to the preset azimuth interval are composed of a boundary line corresponding to the left endpoint of the preset azimuth interval and a boundary line corresponding to the right endpoint of the preset azimuth interval.

In some embodiments of the present disclosure, for each preset azimuth interval, the preset average azimuth in the preset azimuth interval may be the sum of the left endpoint value of the preset azimuth interval and a preset angular difference, and the preset angular difference is an angle between a boundary line corresponding to the left endpoint of the preset azimuth interval in the sector-shaped area corresponding to the preset azimuth interval and a center line of the sector-shaped area corresponding to the preset azimuth interval. The center line of the sector-shaped area corresponding to the preset azimuth interval is a connection line between a center point of the arc on the outline of the sector-shaped area and a center of the circle.

In some embodiments of the present disclosure, dividing the area for image search into the plurality of preset areas includes: dividing the area for image search into the plurality of preset areas based on preset overlapping area information, where any two adjacent preset areas in all the preset areas have an overlapping portion; and dividing the azimuth interval for image search into the plurality of preset azimuth intervals includes: dividing the azimuth interval for image search into the plurality of preset azimuth intervals based on preset overlapping azimuth range information, where any two adjacent preset azimuth intervals in all the preset azimuth intervals have an overlapping portion.

The preset overlapping area information indicates an area of the overlapping portion of any two adjacent preset areas. The preset overlapping azimuth range information indicates an azimuth range of the overlapping portion of any two adjacent preset azimuth intervals.

Any two adj acent preset areas having the overlapping portion may be equivalent to any two adjacent preset areas having the same sub-area.

In some embodiments of the present disclosure, for each preset area in the plurality of preset areas acquired through division, other preset areas adjacent to the preset area in upper, lower, left and right directions of the preset area may all have overlapping portions with the preset area, that is, having the same sub-areas with the preset area.

In some embodiments of the present disclosure, when a capturing position of a preset image or a position of the electronic device when capturing the image to be matched is located in an overlapping portion of two adjacent preset areas, i.e., the same sub-area of the two adjacent preset areas, the capturing position of the preset image or the position of the electronic device when capturing the image to be matched is simultaneously within the two adjacent preset areas. When an azimuth corresponding to a preset image or an azimuth of the camera on the electronic device when capturing the image to be matched is located in an overlapping portion of two adjacent preset azimuth intervals, i.e., the same sub-area of the two adjacent preset azimuth intervals, the azimuth corresponding to the preset image or the azimuth of the camera on the electronic device when capturing the image to be matched is simultaneously within the two adjacent preset azimuth intervals.

In some embodiments of the present disclosure, any two adjacent preset azimuth intervals in all the preset azimuth intervals may all have an overlapping portion, that is, the same sub-interval. An order of the preset azimuth intervals can be determined according to a magnitude of the left endpoint or the right endpoint of each preset azimuth interval, and all preset azimuth intervals can be sorted in an ascending order of the magnitudes of the left or right endpoints of the preset azimuth intervals so that the order of the preset azimuth intervals is determined. For each preset azimuth interval, a preset azimuth interval adjacent to the preset azimuth interval is also determined accordingly. A preset azimuth interval with the smallest left endpoint and a preset azimuth interval with the largest left endpoint are each adjacent to one preset azimuth interval, and the remaining preset azimuth intervals are each adjacent to two preset azimuth intervals.

For example, all the preset azimuth intervals include [0, 30], [28, 50], [52, 90], [88, 120], [118, 150], [148, 180], [178, 210], ..., [298, 330], [328, 360]. For the preset azimuth interval [0, 30], a preset azimuth interval adjacent thereto is the preset azimuth interval [28, 50]. For the preset azimuth interval [28, 50], preset azimuth intervals adjacent thereto are the preset azimuth intervals [0, 30] and [52, 90]. For the preset azimuth interval [328, 360], a preset azimuth interval adjacent thereto is the preset azimuth interval [298, 330]. Any two adjacent preset azimuth intervals in all the preset azimuth intervals have an overlapping portion, that is, the same sub-interval.

In some embodiments of the present disclosure, each preset azimuth interval may correspond to a sector-shaped area in a circle, and an origin of the sector-shaped area is an origin of the circle. For each preset azimuth interval, an angle between two boundary lines of the sector-shaped area corresponding to the preset azimuth interval is a difference between the left endpoint and the right endpoint of the preset azimuth interval. For each preset azimuth interval, the two boundary lines of the sector-shaped area corresponding to the preset azimuth interval are composed of a boundary line corresponding to the left endpoint of the preset azimuth interval and a boundary line corresponding to the right endpoint of the preset azimuth interval.

In some embodiments of the present disclosure, any two adjacent preset azimuth intervals in all the preset azimuth intervals having the same sub-interval is equivalent to respective sector-shaped areas corresponding to any two adjacent preset azimuth intervals having an overlapping sub-area.

In some embodiments of the present disclosure, the acquired position of the electronic device when capturing the image to be matched is within an overlapping portion of multiple preset areas; retrieving, from the preset scene database, the identification of the target preset area where the position of the electronic device when capturing the image to be matched is located and the identification of the target preset azimuth interval where the azimuth of the electronic device when capturing the image to be matched is located includes: determining, in the multiple preset areas where the position of the electronic device when capturing the image to be matched is located, a preset area satisfying a first screening condition as the target preset area, where the first screening condition includes that a distance between a center point of the preset area and the position is the smallest; and retrieving the identification of the target preset area where the position of the electronic device when capturing the image to be matched is located from the preset scene database.

In an example where the acquired position of the electronic device when capturing the image to be matched is in the overlapping portion of two adjacent preset areas, the position of the electronic device when capturing the image to be matched is located in the overlapping portion of the two adjacent preset areas, and the position of the electronic device when capturing the image to be matched is simultaneously located in the two adjacent preset areas. A preset area, in the two adjacent preset areas where the position of the electronic device when capturing the image to be matched is located, that satisfies the first screening condition is determined as the target preset area.

In some embodiments of the present disclosure, the acquired azimuth of the camera on the electronic device when capturing the image to be matched is in the overlapping portion of multiple preset azimuth intervals; retrieving, from the preset scene database, the identification of the target preset area where the position of the electronic device when capturing the image to be matched is located and the identification of the target preset azimuth interval where the azimuth of the electronic device when capturing the image to be matched is located includes: determining, in the plurality of preset azimuth intervals where the azimuth of the camera on the electronic device when capturing the image to be matched is located, a preset azimuth interval satisfying a second screening condition as the target preset azimuth interval, and retrieving the identification of the target preset azimuth interval from the preset scene database, where the second screening condition includes that an angular difference between a preset average azimuth in the preset azimuth interval and the azimuth of the camera on the electronic device when capturing the image to be matched is the smallest.

When the azimuth of the camera on the electronic device when capturing the image to be matched is located in the overlapping portion of two adjacent preset azimuth intervals, that is, the same sub-area of the two adjacent preset azimuth intervals, the azimuth corresponding to the preset image is simultaneously in the two adjacent preset azimuth intervals. A preset azimuth interval, in the two adjacent preset azimuth intervals where the azimuth of the camera on the electronic device when capturing the image to be matched is located, that satisfies the second screening condition is determined as the target preset azimuth interval. FIG. 2 is a schematic flowchart of establishing a correspondence between a preset area, a preset azimuth interval and a preset image set.

The preset image set can be called a group. In FIG. 2, group 1, group 2, group 3 ... group N are shown. Each group corresponds to one preset area and one preset azimuth interval. For each group, the preset area corresponding to the group is different from a preset area corresponding to another group, and/or the preset azimuth interval corresponding to the preset image is different from a preset azimuth interval corresponding to another group.

For each group, a capturing position of each of preset images in the preset image set is within the preset area corresponding to the preset image set, and the azimuth corresponding to each of the preset images in the preset image set is within the preset azimuth interval corresponding to the preset image set.

Before the correspondence between the preset area, the preset azimuth interval and the preset image set is established, each group is empty. When establishing the correspondence between the preset area, the preset azimuth interval and the preset image set, for each preset image captured in advance, the azimuth corresponding to the preset image, that is, the azimuth of the camera when capturing the preset image, is calculated according to the magnetic induction intensity output by the magnetometer on the device that captures the preset image when the preset image is captured and the gravitational acceleration of the device that captures the preset image when the preset image is captured.

For each preset image captured in advance, when the capturing position of the preset image is located in a preset area and the azimuth corresponding to the preset image is located in a preset azimuth interval, the preset image is added to a group corresponding to the preset area and the preset azimuth interval. For each preset image captured in advance, the preset image may be added to one or more groups. Accordingly, the correspondence between the preset area, the preset azimuth interval and the preset image set is established.

In some embodiments of the present disclosure, based on the determined target preset area and target preset azimuth interval, a target preset image set corresponding to the target preset area and corresponding to the target preset azimuth interval may be acquired.

For example, the acquired position of the electronic device is located in the same sub-area of the preset area p and the preset area p1, and the acquired position of the electronic device is located in both the preset area p and the preset area p1. The acquired azimuth of the camera of the electronic device is located in the overlapping portion, that is, the same sub-interval, of the preset azimuth interval d and the preset azimuth interval d1, and the acquired azimuth of the camera of the electronic device is located in both the preset azimuth interval d and the preset azimuth interval d1.

Assuming that a distance between a center point of the preset area p and the acquired position is smaller than a distance between a center point of the preset area p1 and the acquired position, and an angular difference between a preset azimuth in the preset azimuth interval d and the acquired azimuth is smaller than an angular difference between a preset azimuth in the preset azimuth interval d1 and the acquired azimuth, then the preset area p is used as the target preset area, and the preset azimuth interval d is used as the target preset azimuth interval.

Based on the determined target preset area, i.e., the preset area p, and the determined target preset azimuth interval, i.e., the preset azimuth interval d, a preset image set in all the preset image sets that corresponds to the preset area p and corresponds to the preset azimuth interval d is determined as the target preset image set.

In 103, the preset scene database is searched for a corresponding target preset image set according to the identification of the target preset area and the identification of the target preset azimuth interval.

Each preset image set corresponds to one preset area and one preset azimuth interval in advance, and a preset image set corresponding to the identification of the target preset area and the identification of the target preset azimuth interval can be referred to as the target preset image set. The corresponding target preset image set can be looked for in the preset scene database according to the identification of the target preset area and the identification of the target preset azimuth interval.

The capturing position of each preset image in the target preset image set is within the target preset area corresponding to the target preset image set, and the azimuth corresponding to each preset image in the target preset image set is within the target preset azimuth interval corresponding to the target preset image set.

In 104, a target image that matches the image to be matched is acquired from the target preset image set.

In some embodiments of the present disclosure, in finding out from the target preset image set a matching image that matches the image to be matched, such as an image currently captured by the camera, a feature of the image to be matched, such as a feature of the image currently captured by the camera of the electronic device, may be extracted, and the feature is, for example, a local Scale Invariant Feature Transform (SIFT) feature. A similarity between the feature (for example, the local feature) of the image to be matched, such as the image currently captured by the camera of the electronic device, and the feature (for example, the local feature) of each of the preset images in the target preset image set can be calculated, respectively. A preset image with a feature having the highest similarity to the feature of the image currently captured by the camera of the electronic device is determined as the matching image that matches the image currently captured by the camera of the electronic device.

In some embodiments of the present disclosure, finding out the target image that matches the image to be matched from the target preset image set includes: extracting a feature of the image to be matched; generating a feature vector of the image to be matched based on the feature of the image to be matched; calculating a similarity between the feature vector of the image to be matched and a feature vector of each preset image in the target preset image set; and determining a preset image in the target preset image set that has a feature vector with the greatest similarity to the feature vector of the image to be matched, as the target image matching the image to be matched.

In some embodiments of the present disclosure, in finding out from the target preset image set the matching image that matches the image to be matched, such as the image currently captured by the camera of the electronic device, the feature of the image to be matched, such as the image currently captured by the camera of the electronic device, may be extracted. Based on the feature of the image to be matched, such as the image currently captured by the camera of the electronic device, the feature vector of the image to be matched, such as the image currently captured by the camera of the electronic device, is generated. The similarity between the feature vector of the image to be matched, such as the image currently captured by the camera of the electronic device, and the feature vector of each preset image in the target preset image set may be calculated.

In some embodiments of the present disclosure, the feature vector of the currently captured image may be generated based on the feature of the currently captured image using a Distributed Bag of Words (DBoW) algorithm. In the DBoW algorithm, clustering is first performed on the extracted features of the images by using a clustering algorithm such as K-means, and multiple clustering results are acquired. Each of the clustering results is used as a visual word. An occurrence frequency of the visual word is counted, and a weight of the visual word is calculated. The feature vector of the currently captured image is acquired according to the occurrence frequency of the visual word and the calculated weight of the visual word. The feature vector of each of the preset images in the target preset image set is also generated with the DBoW algorithm.

In some embodiments of the present disclosure, the preset image in the target preset image set that has the feature vector with the greatest similarity to the feature vector of the image to be matched, such as the image currently captured by the camera of the electronic device, may be determined as the matching image that matches the image to be matched, such as the image currently captured by the camera of the electronic device.

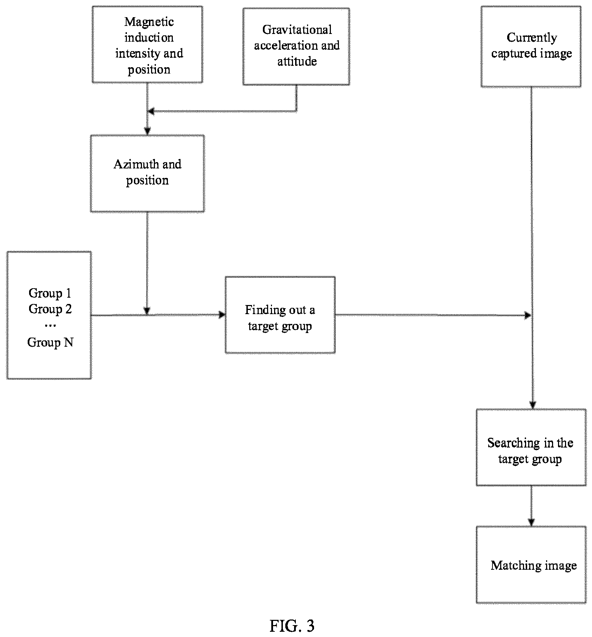

FIG. 3 is a schematic flowchart showing a process of finding out a matching image that matches an image currently captured by a camera of an electronic device.

The preset image set can be referred to as a group. When re-localization is performed on the electronic device, the position of the electronic device and the azimuth of the camera of the electronic device are acquired. When there are multiple preset areas where the acquired position of the electronic device is located, in determining the target preset area in all the preset areas where the acquired position is located, for each of all the preset areas where the acquired position of the electronic device is located, a distance between a center point of the preset area and the acquired position can be calculated, and a preset area with the shortest distance between the center point of the preset area and the acquired position in all the preset areas where the acquired position of the electronic device is located is determined as the target preset area. When all the preset azimuth intervals where the acquired azimuth is located include multiple preset azimuth intervals, in determining the target preset azimuth interval in all the preset azimuth intervals where the acquired azimuth is located, for each of all the preset azimuth intervals where the acquired azimuth is located, the angular difference between the preset average azimuth in the azimuth interval and the acquired azimuth can be calculated. A preset azimuth interval with the smallest angular difference between the preset average azimuth in the preset azimuth interval and the acquired azimuth in all the preset azimuth intervals where the acquired azimuth is located is determined as the target preset azimuth interval.

Based on the determined target preset area and target preset azimuth interval, a target group that corresponds to the target preset area and corresponds to the target preset azimuth interval may be acquired. A search can be performed in the target group so as to find out the matching image that matches the image currently captured by the camera of the electronic device from the target group.

In some embodiments of the present disclosure, the method further includes: acquiring an attitude of the electronic device when the image to be matched is captured; determining a re-localized position of the electronic device based on the capturing position of the target image and the position of the electronic device when the image to be matched is captured; and determining a re-localized attitude of the electronic device based on a preset attitude corresponding to the target image and the attitude of the electronic device when the image to be matched is captured.

In some embodiments of the present disclosure, each preset image has a capturing position. Each preset image corresponds to a preset attitude.

In some embodiments of the present disclosure, for each preset image, the capturing position of the preset image may be a position of a device that captures the preset image when the preset image is captured, and the position of the device is acquired by a GPS sensor on the device that captures the preset image. For each preset image, the capturing position of the preset image may also be the position acquired by correcting the position of the device that captures the preset image when the preset image is captured, which is acquired by the GPS sensor.

In some embodiments of the present disclosure, for each preset image, the preset attitude corresponding to the preset image may be an attitude of the device that captures the preset image when the preset image is captured, and the attitude of the device is acquired by a gyroscope on the device that captures the preset image. For each preset image, the preset attitude corresponding to the preset image may be the attitude acquired by correcting the attitude of the device that captures the preset image when the preset image is captured, which is acquired by the gyroscope.

In some embodiments of the present disclosure, in response to finding out the matching image that matches the image currently captured by the camera of the electronic device, the re-localized position of the electronic device may be determined based on the capturing position of the matching image and the acquired position of the electronic device.

For example, the capturing position of the matching image that matches the image currently captured by the camera of the electronic device is the position of the device that captures the matching image when the matching image is captured, which is acquired by the GPS sensor on the device that captures the matching image. When the re-localized position of the electronic device is determined based on the capturing position of the matching image and the acquired position of the electronic device, a longitude average and a latitude average can be calculated, and the re-localized position is obtained by combining the longitude average and the latitude average. The longitude average is a numerical value acquired by dividing the sum of the longitude in the capturing position of the matching image and the longitude in the acquired position of the electronic device by 2. The latitude average is a numerical value acquired by dividing the sum of the latitude in the capturing position of the matching image and the latitude in the acquired position of the electronic device by 2.

For another example, the capturing position of the matching image that matches the image currently captured by the camera of the electronic device is the corrected position, and the capturing position of the matching image can be directly used as the re-localized position of the electronic device.

The above-mentioned methods for calculating the re-localized position of the electronic device are only exemplary, and any existing re-localization method based on the capturing position of the found image and the acquired position can be used to determine the re-localized position of the electronic device based on the capturing position of the matching image and the acquired position of the electronic device.

In some embodiments of the present disclosure, the re-localized attitude of the electronic device may be determined based on the preset attitude corresponding to the matching image and the acquired attitude.

For example, the preset attitude corresponding to the matching image that matches the image currently captured by the camera of the electronic device is the attitude of the device that captures the preset image when the preset image is captured, which is acquired by the gyroscope on the device that captures the preset image. When the re-localized attitude of the electronic device is determined based on the preset attitude corresponding to the matching image and the acquired attitude, averages of respective attitude angles can be calculated, and the re-localized attitude of the electronic device can be obtained by combining the averages of the respective attitude angles.

For another example, the preset attitude corresponding to the matching image that matches the image currently captured by the camera of the electronic device is the corrected attitude, and the preset attitude corresponding to the matching image can be directly used as the re-localized attitude of the electronic device.

The above-mentioned methods for calculating the re-localized attitude of the electronic device are only exemplary, and any existing re-localization method based on the attitude corresponding to the found image and the acquired attitude can be used to determine the re-localized attitude of the electronic device based on the preset attitude corresponding to the matching image and the acquired attitude of the electronic device.

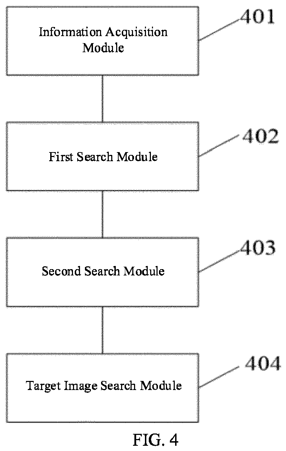

FIG. 4 is a structural block diagram of an apparatus for searching for an image according to an exemplary embodiment. The apparatus for searching for the image can be applied to an electronic device including a camera. As shown in FIG. 4, the apparatus for searching for the image includes: an information acquisition module 401, a first search module 402, a second search module 403, and a target image search module 404.

The information acquisition module 401 is configured to acquire an image to be matched, a first position of the electronic device, and an azimuth of the camera.

The first search module 402 is configured to retrieve, from a preset scene database, an identification of a target preset area where the first position is located and an identification of a target preset azimuth interval where the azimuth is located.

The second search module 403 is configured to search for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets.

The target image search module 404 is configured to acquire a target image that matches the image to be matched from the target preset image set.

In some embodiments of the present disclosure, the apparatus for searching for the image further includes: a preset scene database establishment module, configured to divide an area for image search into a plurality of preset areas, and divide an azimuth interval for image search into a plurality of preset azimuth intervals; and divide all preset images captured in advance into a plurality of preset image sets, wherein a capturing position of each of preset images in a preset image set is within a preset area corresponding to the preset image set, and an azimuth corresponding to each of the preset images in the preset image set is within a preset azimuth interval corresponding to the preset image set; and for each preset image set in the plurality of preset image sets, store the preset image set, an identification of a preset area corresponding to the preset image set, and an identification of a preset azimuth interval corresponding to the preset image set in the preset scene database in correspondence.

In some embodiments of the present disclosure, the preset scene database establishment module includes: a preset area division sub-module, configured to divide the area for image search into the plurality of preset areas based on preset overlapping area information, wherein any two adjacent preset areas in all the preset areas have an overlapping portion; and a preset azimuth interval division sub-module, configured to divide the azimuth interval for image search into the plurality of preset azimuth intervals based on preset overlapping azimuth range information, wherein any two adjacent preset azimuth intervals in all the preset azimuth intervals have an overlapping portion.

In some embodiments of the present disclosure, the first search module is further configured to, when the position is within an overlapping portion of multiple preset areas, determine, in the multiple preset areas where the position is located, a preset area satisfying a first screening condition as the target preset area, wherein the first screening condition includes that a distance between a center point of the preset area and the position is the smallest; and retrieve the identification of the target preset area from the preset scene database.

In some embodiments, the first search module is further configured to, when the azimuth is within an overlapping portion of multiple preset azimuth intervals, determine, in the multiple preset azimuth intervals where the azimuth is located, a preset azimuth interval satisfying a second screening condition as the target preset azimuth interval, wherein the second screening condition includes that an angular difference between a preset average azimuth in the preset azimuth interval and the azimuth is the smallest; and retrieve the identification of the target preset azimuth interval from the preset scene database.

In some embodiments, the information acquisition module includes: an azimuth determination sub-module, configured to acquire a magnetic induction intensity and a gravitational acceleration of the electronic device when the image to be matched is captured; generate a magnetic induction intensity vector corresponding to the magnetic induction intensity, and generate a gravitational acceleration vector corresponding to the gravitational acceleration; calculate a rotation matrix between a geographic coordinate system and a camera coordinate system based on the magnetic induction intensity vector and the gravitational acceleration vector; and calculate the azimuth of the camera on the electronic device based on the rotation matrix between the geographic coordinate system and the camera coordinate system.

In some embodiments, the target image search module includes: a match sub-module, configured to extract a feature of the image to be matched; generate a feature vector of the image to be matched based on the feature of the image to be matched; calculate a similarity between the feature vector of the image to be matched and a feature vector of each preset image in the target preset image set; and determine, in the target preset image set, a preset image that has a feature vector with the greatest similarity to the feature vector of the image to be matched as the target image matching the image to be matched.

In some embodiments, the apparatus for searching for the image further includes: a re-localization module, configured to acquire an attitude of the electronic device when the image to be matched is captured; determine a re-localized position of the electronic device based on a capturing position of the target image and the position; and determine a re-localized attitude of the electronic device based on a preset attitude corresponding to the target image and the attitude.

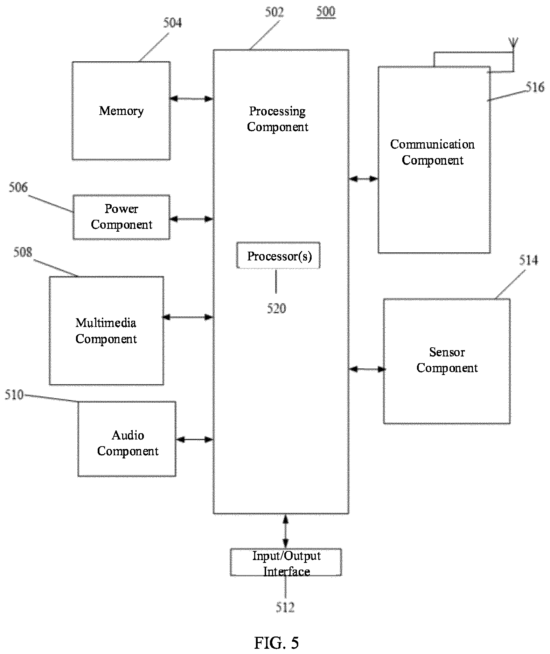

FIG. 5 is a structural block diagram of an electronic device according to an exemplary embodiment. For example, the electronic device 500 may be a mobile phone, a computer, a digital broadcast electronic device, a messaging device, a game console, a tablet device, a medical device, a fitness device, a personal digital assistant, or the like.

As shown in FIG. 5, the electronic device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the electronic device 500, such as the operations associated with display, telephone calls, data communications, camera operations, and recording operations. The processing component 502 may include one or more processors 520 to execute instructions to perform all or part of the steps in the image search method described above. Moreover, the processing component 502 may include one or more modules which facilitate interaction between the processing component 502 and other components. For instance, the processing component 502 may include a multimedia module to facilitate the interaction between the multimedia component 508 and the processing component 502.

The memory 504 is configured to store various types of data to support the operation of the electronic device 500. Examples of such data include instructions for any applications or methods operated on the electronic device 500, contact data, phonebook data, messages, pictures, video, etc. The memory 504 may be implemented using any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 506 provides power to various components of the electronic device 500. The power component 506 may include a power management system, one or more power sources, and any other components associated with the generation, management, and distribution of power in the electronic device 500.

The multimedia component 508 includes a screen providing an output interface between the electronic device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the electronic device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the electronic device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the electronic device 500. For instance, the sensor component 514 may detect an open/closed status of the electronic device 500, relative positioning of components, e.g., the display and the keypad, of the electronic device 500, a change in position of the electronic device 500 or a component of the electronic device 500, a presence or absence of user contact with the electronic device 500, an orientation or an acceleration/deceleration of the electronic device 500, and a change in temperature of the electronic device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate wired or wireless communication between the electronic device 500 and other apparatus. The electronic device 500 may access a wireless network based on a communication standard, such as Wi-Fi, an operator network (e.g., 2G, 3G, 4G, or 5G), or a combination thereof. In one embodiment, the communication component 516 receives a broadcast signal or broadcast associated information from an external broadcast management system via a broadcast channel. In one embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment, the electronic device 500 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the operations shown in FIG.1.

In an embodiment, there is also provided a storage medium including instructions, such as the memory including instructions, the above instructions may be executed by the electronic device for performing the above-described methods. Optionally, the storage medium may be a non-transitory computer-readable storage medium. For example, the non-transitory computer-readable storage medium may be a ROM, a Random Access Memory (RAM), a CD-ROM, a magnetic tape, a floppy disc, an optical data storage device, and the like.

The present disclosure also provides a computer program which, when being executed by a processor of a computer, causes the computer to perform the operations shown in FIG. 1.

Other embodiments of the present disclosure will be apparent to those skilled in the art from consideration of the specification and practice of the present disclosure disclosed here. The present disclosure is intended to cover any variations, uses, or adaptations of the present disclosure that follow the general principles thereof and include common knowledge or conventional technical means in the technical field not disclosed in the present disclosure. The specification and embodiments are considered as exemplary only, and a true scope and spirit of the present disclosure is indicated by the appending claims.

All the embodiments of the present disclosure can be implemented independently or in combination with other embodiments, which are all regarded as the protection scope claimed by the present disclosure.

It will be appreciated that the present disclosure is not limited to the precise structures that have been described above and illustrated in the accompanying drawings, and that various modifications and changes can be made without departing from the scope thereof. It is intended that the scope of the present disclosure only be limited by the appended claims.

## Claims

1. A method for searching for an image, applied to an electronic device comprising a camera, the method comprising:
acquiring an image to be matched, a first position of the electronic device, and an azimuth of the camera;
retrieving, from a preset scene database, an identification of a target preset area where the first position is located and an identification of a target preset azimuth interval where the azimuth is located;
searching for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets; and
acquiring a target image that matches the image to be matched from the target preset image set.

2. The method according to claim 1, further comprising:
establishing the preset scene database, wherein said establishing the preset scene database comprises:
dividing an area for image search into a plurality of preset areas, and dividing an azimuth interval for image search into a plurality of preset azimuth intervals;
dividing all preset images captured in advance into the plurality of preset image sets based on a preset area where a capturing position of each of the preset images is located and a preset azimuth interval where a azimuth corresponding to each of the preset images is located, wherein a capturing position of each preset image in a preset image set is within the preset area corresponding to the preset image set, and an azimuth corresponding to each preset image in the preset image set is within the preset azimuth interval corresponding to the preset image set; and
for each preset image set in the plurality of preset image sets, storing the preset image set and the identification of the preset area corresponding to the preset image set and the identification of the preset azimuth interval corresponding to the preset image set in the preset scene database in correspondence.

3. The method according to claim 2, wherein said dividing the area for image search into the plurality of preset areas and dividing the azimuth interval for image search into the plurality of preset azimuth intervals comprises:
dividing the area for image search into the plurality of preset areas based on preset overlapping area information, wherein any two adjacent preset areas in all the preset areas have an overlapping portion; and
dividing the azimuth interval for image search into the plurality of preset azimuth intervals based on preset overlapping azimuth range information, wherein any two adjacent preset azimuth intervals in all the preset azimuth intervals have an overlapping portion.

4. The method according to claim 3, wherein the position is within an overlapping portion of multiple preset areas;
said retrieving, from the preset scene database, the identification of the target preset area where the position is located comprises:
determining, from among the multiple preset areas where the position is located, a preset area satisfying a first screening condition as the target preset area, wherein the first screening condition comprises that a distance between a center point of the preset area and the position is the smallest; and
retrieving the identification of the target preset area from the preset scene database.

5. The method according to claim 3, wherein the azimuth is within an overlapping portion of multiple preset azimuth intervals;
said retrieving, from the preset scene database, the identification of the target preset azimuth interval where the azimuth is located comprises:
determining, from among the multiple preset azimuth intervals where the azimuth is located, a preset azimuth interval satisfying a second screening condition as the target preset azimuth interval, wherein the second screening condition comprises that an angular difference between a preset average azimuth in the preset azimuth interval and the azimuth is the smallest; and
retrieving the identification of the target preset azimuth interval from the preset scene database.

6. The method according to claim 1, wherein said acquiring the azimuth of the camera of the electronic device when the image to be matched is captured comprises:
acquiring a magnetic induction intensity and a gravitational acceleration of the electronic device when the image to be matched is captured;
generating a magnetic induction intensity vector corresponding to the magnetic induction intensity, and generating a gravitational acceleration vector corresponding to the gravitational acceleration;
calculating a rotation matrix between a geographic coordinate system and a camera coordinate system based on the magnetic induction intensity vector and the gravitational acceleration vector; and
calculating the azimuth based on the rotation matrix between the geographic coordinate system and the camera coordinate system.

7. The method according to claim 1, wherein said acquiring the target image that matches the image to be matched from the target preset image set comprises:
extracting a feature of the image to be matched;
generating a feature vector of the image to be matched based on the feature of the image to be matched;
calculating a similarity between the feature vector of the image to be matched and a feature vector of each preset image in the target preset image set; and
determining, in the target preset image set, a preset image that has a feature vector with the greatest similarity to the feature vector of the image to be matched as the target image that matches the image to be matched.

8. The method according to claims 1-7, further comprising:
acquiring an attitude of the electronic device when the image to be matched is captured;
determining a re-localized position of the electronic device based on a capturing position of the target image and the position; and
determining a re-localized attitude of the electronic device based on a preset attitude corresponding to the target image and the attitude.

9. An apparatus for searching for an image, applied to an electronic device comprising a camera, the apparatus comprising:
an information acquisition module, configured to acquire an image to be matched, a first position of the electronic device, and an azimuth of the camera;
a first search module, configured to retrieve, from a preset scene database, an identification of a target preset area where the first position is located and an identification of a target preset azimuth interval where the azimuth is located;
a second search module, configured to search for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets; and
a target image search module, configured to acquire a target image that matches the image to be matched from the target preset image set.

10. The apparatus according to claim 9, further comprising:
a preset scene database establishment module, configured to divide an area for image search into a plurality of preset areas, and divide an azimuth interval for image search into a plurality of preset azimuth intervals; divide all preset images captured in advance into the plurality of preset image sets, wherein a capturing position of each preset image in a preset image set is within the preset area corresponding to the preset image set, and an azimuth corresponding to each preset image in the preset image set is within the preset azimuth interval corresponding to the preset image set; and for each preset image set in the plurality of preset image sets, store the preset image set and the identification of the preset area corresponding to the preset image set and the identification of the preset azimuth interval corresponding to the preset image set in the preset scene database in correspondence.

11. The apparatus according to claim 10, wherein the preset scene database establishment module comprises:
a preset area division sub-module, configured to divide the area for image search into the plurality of preset areas based on preset overlapping area information, wherein any two adjacent preset areas in all the preset areas have an overlapping portion; and
a preset azimuth interval division sub-module, configured to divide the azimuth interval for image search into the plurality of preset azimuth intervals based on preset overlapping azimuth range information, wherein any two adjacent preset azimuth intervals in all the preset azimuth intervals have an overlapping portion.

12. The apparatus according to claim 11, wherein the first search module is further configured to, when the position is within an overlapping portion of multiple preset areas, determine, from among the multiple areas where the position is located, a preset area satisfying a first screening condition as the target preset area, wherein the first screening condition comprises that a distance between a center point of the preset area and the position is the smallest; and retrieve the identification of the target preset area from the preset scene database.

13. The apparatus according to claim 11, wherein the first search module is further configured to, when the azimuth is within an overlapping portion of multiple preset azimuth intervals, determine, from among the multiple preset azimuth intervals where the azimuth is located, a preset azimuth interval satisfying a second screening condition as the target preset azimuth interval, wherein the second screening condition comprises that an angular difference between a preset average azimuth in the preset azimuth interval and the azimuth is the smallest; and retrieve the identification of the target preset azimuth interval from the preset scene database.

14. The apparatus according to claim 9, wherein the information acquisition module comprises:
an azimuth determination sub-module, configured to acquire a magnetic induction intensity and a gravitational acceleration of the electronic device when the image to be matched is captured; generate a magnetic induction intensity vector corresponding to the magnetic induction intensity, and generate a gravitational acceleration vector corresponding to the gravitational acceleration; calculate a rotation matrix between a geographic coordinate system and a camera coordinate system based on the magnetic induction intensity vector and the gravitational acceleration vector; and calculate the azimuth of the camera on the electronic device based on the rotation matrix between the geographic coordinate system and the camera coordinate system.

15. The apparatus according to claim 9, wherein the target image search module comprises:
a match sub-module, configured to extract a feature of the image to be matched; generate a feature vector of the image to be matched based on the feature of the image to be matched; calculate a similarity between the feature vector of the image to be matched and a feature vector of each preset image in the target preset image set; and determine, in the target preset image set, a preset image that has a feature vector with the greatest similarity to the feature vector of the image to be matched as the target image that matches the image to be matched.

16. The apparatus according to claims 9-15, further comprising:
a re-localization module, configured to acquire an attitude of the electronic device when the image to be matched is captured; determine a re-localized position of the electronic device based on a capturing position of the target image and the position; and determine a re-localized attitude of the electronic device based on a preset attitude corresponding to the target image and the attitude.

17. An electronic device comprising:
a camera;
a processor; and
a memory for storing instructions executable by the processor:
wherein the processor is configured to execute the instructions to implement the following operations:
acquiring an image to be matched, a first position of the electronic device, and an azimuth of the camera;
retrieving, from a preset scene database, an identification of a target preset area where the first position is located and an identification of a target preset azimuth interval where the azimuth is located;
searching for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets; and
acquiring a target image that matches the image to be matched from the target preset image set.

18. The electronic device according to claim 17, wherein the processor is configured to execute the instructions to implement the following operations:
establishing the preset scene database, wherein said establishing the preset scene database comprises:
dividing an area for image search into a plurality of preset areas, and dividing an azimuth interval for image search into a plurality of preset azimuth intervals;
dividing all preset images captured in advance into the plurality of preset image sets based on a preset area where a capturing position of each of the preset images is located and a preset azimuth interval where a azimuth corresponding to each of the preset images is located, wherein a capturing position of each preset image in a preset image set is within the preset area corresponding to the preset image set, and an azimuth corresponding to each preset image in the preset image set is within the preset azimuth interval corresponding to the preset image set; and
for each preset image set in the plurality of preset image sets, storing the preset image set and the identification of the preset area corresponding to the preset image set and the identification of the preset azimuth interval corresponding to the preset image set in the preset scene database in correspondence.

19. The electronic device according to claim 18, wherein said dividing the area for image search into the plurality of preset areas and the dividing the azimuth interval for image search into the plurality of preset azimuth intervals comprises:
dividing the area for image search into the plurality of preset areas based on preset overlapping area information, wherein any two adjacent preset areas in all the preset areas have an overlapping portion; and
dividing the azimuth interval for image search into the plurality of preset azimuth intervals based on preset overlapping azimuth range information, wherein any two adjacent preset azimuth intervals in all the preset azimuth intervals have an overlapping portion.

20. The electronic device according to claim 19, wherein the position is within an overlapping portion of multiple of preset areas;
said retrieving, from the preset scene database, the identification of the target preset area where the position is located comprises:
determining, from among the multiple preset areas where the position is located, a preset area satisfying a first screening condition as the target preset area, wherein the first screening condition comprises that a distance between a center point of the preset area and the position is the smallest; and
retrieving the identification of the target preset area from the preset scene database.

21. The electronic device according to claim 19, wherein the azimuth is within an overlapping portion of multiple preset azimuth intervals;
said retrieving, from the preset scene database, the identification of the target preset azimuth interval where the azimuth is located comprises:
determining, from among the multiple preset azimuth intervals where the azimuth is located, a preset azimuth interval satisfying a second screening condition as the target preset azimuth interval, wherein the second screening condition comprises that an angular difference between a preset average azimuth in the preset azimuth interval and the azimuth is the smallest; and
retrieving the identification of the target preset azimuth interval from the preset scene database.

22. The electronic device according to claim 17, wherein said acquiring the azimuth of the camera of the electronic device when the image to be matched is captured comprises:
acquiring a magnetic induction intensity and a gravitational acceleration of the electronic device when the image to be matched is captured;
generating a magnetic induction intensity vector corresponding to the magnetic induction intensity, and generating a gravitational acceleration vector corresponding to the gravitational acceleration;
calculating a rotation matrix between a geographic coordinate system and a camera coordinate system based on the magnetic induction intensity vector and the gravitational acceleration vector; and
calculating the azimuth based on the rotation matrix between the geographic coordinate system and the camera coordinate system.

23. The electronic device according to claim 17, wherein said acquiring the target image that matches the image to be matched from the target preset image set comprises:
extracting a feature of the image to be matched;
generating a feature vector of the image to be matched based on the feature of the image to be matched;
calculating a similarity between the feature vector of the image to be matched and a feature vector of each preset image in the target preset image set; and
determining, in the target preset image set, a preset image that has a feature vector with the greatest similarity to the feature vector of the image to be matched as the target image that matches the image to be matched.

24. The electronic device according to any one of claims 17-23, wherein the processor is configured to execute the instructions to implement the following operations:
acquiring an attitude of the electronic device when the image to be matched is captured;
determining a re-localized position of the electronic device based on a capturing position of the target image and the position; and
determining a re-localized attitude of the electronic device based on a preset attitude corresponding to the target image and the attitude.

25. A non-transitory computer-readable storage medium, wherein instructions in the storage medium, when being executed by a processor of an electronic device, cause the electronic device comprising a camera to perform the following operations:
acquiring an image to be matched, a first position of the electronic device, and an azimuth of the camera;
retrieving, from a preset scene database, an identification of a target preset area where the first position is located and an identification of a target preset azimuth interval where the azimuth is located;
searching for a corresponding target preset image set in the preset scene database according to the identification of the target preset area and the identification of the target preset azimuth interval, wherein the preset scene database stores a plurality of preset image sets and identifications of a preset area and a preset azimuth interval corresponding to each of the preset image sets; and
acquiring a target image that matches the image to be matched from the target preset image set.
